**Europäisches Patentamt**

**European Patent Office**

**Office européen des brevets**

(19)

(11) Publication number: **0 177 677**
**B1**

(12) # EUROPEAN PATENT SPECIFICATION

(45) Date of publication of patent specification: **28.09.88**

(51) Int. Cl.⁴: **B 65 G 39/07, B 65 G 15/00**

(21) Application number: **85108080.4**

(22) Date of filing: **01.07.85**

---

(54) An electrostatic charge and bump free conveyor.

---

(30) Priority: **12.09.84 US 649574**

(43) Date of publication of application:
**16.04.86 Bulletin 86/16**

(45) Publication of the grant of the patent:
**28.09.88 Bulletin 88/39**

(84) Designated Contracting States:
**DE FR GB**

(56) References cited:
**AT-B- 324 208**
**DE-A-2 534 167**
**FR-A-2 156 855**

(73) Proprietor: **International Business Machines Corporation**
**Old Orchard Road**
**Armonk, N.Y. 10504 (US)**

(72) Inventor: **Anderson, Norman Douglas**
**1016 Tamarind Way**
**Boca Raton Florida 33432 (US)**
Inventor: **Brancke, John Skinner**
**3510 Pine Haven Circle**
**Boca Raton Florida (US)**
Inventor: **Entrekim, David Asa**
**5972 Pinebrook Drive**
**Boca Raton Florida 33433 (US)**
Inventor: **Weidendorf, Joel Paul**
**Rural Route No. 1, Box 91**
**West Concord Minnesota 55985 (US)**

(74) Representative: **Arrabito, Michelangelo**
**IBM ITALIA S.p.A. Direzione Brevetti MI-SEG-555**
**P.O. Box 137**
**I-20090 Segrate (Milano) (IT)**

Courier Press, Leamington Spa, England.

## Description

This invention relates to conveyors and, more particularly, to a conveyor in which a positive continuous electrostatic discharge path is established and in which there is less shock or bumping of fragile articles being conveyed.

Articles being moved on a conveyor system frequently become charged with static electrical energy, which is measured as a voltage differential between the surface of the conveyed article and ground. This energv can be caused by many factors, such as low relative humidity or relative motion occurring between the conveyed articles and the roller surfaces. These factors are usually present in known roller conveyor systems in today's manufacturing plants.

The static charge build-up on surfaces of conveyed articles and the electrical field associated with this charge is highly damaging to present day semiconductor components and their assemblies, especially computer logic or memory devices.

It has been found that the static charge and/or controlled discharge of energy can permanently damage semiconductor devices, thereby resulting in heavy losses since these items are very expensive. An additional problem is the rework associated with removal and replacement of the damaged devices.

In many cases the static field may not permanently damage the electronic device, but may overstress the circuitry to the point that early or premature failure of the device will occur. Of course, this unplanned breakdown causes field service problems and an unacceptable quality level. Since this electrical overloading cannot be detected, it is essential that the build-up and random discharge of static electricity be prevented.

Roller conveyors in accordance with the precharacterizing portion of claim 1 are known. The known roller conveyor designs utilized many parts that are not continuously and positively grounded. For example, the electrical path circuit in these designs utilized painted frameworks, joints that can become rusted, and rollers that depend on lubricated ball bearings for circuit continuity. It is well known that lubricants have a life associated with their properties, making the circuit through them variable with life.

Additionally, the lubricants can become contaminated with non-conducting particles, further increasing the resistance of the circuit, or worse, causing the resistance to vary, producing uncontrollable voltage discharges. Also, painted conveyor framework often becomes chipped, allowing rust to develop which increases the resistance in the path used for a ground circuit.

Prior art conveyors compensate for this lack of a dependable ground by adding an expensive secondary circuit. For example, grounds have been constructed by mounting a permanent brush or contact that brushes or touches the surface of the conveyed article and provides a path for any built-up charge of electrons. This type of grounding system is extremely variable with time, creating an expensive non-dependable maintenance headache. For example, the brush contact wears very quickly and the size of articles being conveyed very often is changed so that the one brush is not suitable. The surface of the brush often becomes contaminated and the brush surface often contaminates the article being conveyed. The required pressure for good operation between the brush and the article being conveyed must be maintained. These secondary grounding devices must be periodically employed in conventional systems which usually creates areas of good ground mixed with areas of poor ground caused by the previously mentioned causes of poor grounds. These types of solutions have not been completely effective, and are relatively expensive to install and maintain.

Roller conveyors are known for the bumpy ride given articles being conveyed thereon. This is generally known as porpoising. The material or cushioned conveyors which have a continuous flat material surface available for conveying tend to not track straight; that is, the articles being conveyed tend to be directed to one side or the other creating contact with the side rails in some instances. Another serious problem with conveyors is that of bumping of articles going from one conveyor section to another conveyor section where the front article has stopped causing the following articles to crash or bump.

Accordingly, it is a purpose of the present invention to provide a continuous positive circuit path to ground for electron flow thereby preventing any electrical charge build-up on the articles being conveyed on a conveyor.

It is a further purpose of the present invention to provide a multi-section conveyor having in each section a detector connected to control means for preventing bumping or crashing of articles conveyed thereby.

The above disadvantages of the prior art are overcome by the conveyor of the invention as claimed which provides electrically conductive, resilient, continuous belt means for conveying articles along a conveyor frame. A drive means, which includes a drive roller supported by and forming electrical continuity with the electrically conductive frame, drives the continuous belt means. The continuous belts extend around an end idler roller, which is located at an end of the conveyor. Intermediate idler rollers are located between the drive roller and the end idler roller and provide support for the continuous conductive resilient belts. The drive roller, the end idler roller and the intermediate rollers all have electrically conductive sleeves associated therewith. The drive roller has a fixed electrically conductive shaft running lengthwise therethrough and an electrically conductive path from the electrically conductive sleeve to the fixed electrical conductive shaft, established through a flat needle bearing with one half rotating with the sleeve and one half fixed to said shaft. The shaft is mechanically attached to the electrically conductive frame to secure the drive roller and provide electrical continuity between the drive roller and the frame. Grounding means are also provided electrically connecting the frame to ground, thereby providing a continuous electrical discharge path for articles carried by the conveyor.

The resilient belt means provides a straight tracking, cushioned conveying surface for articles. The conveyor sections can be attached serially at the frames forming a custom length conveyor. A detector is located on each conveyor section, which detector is connected to a computer or other control means for detecting the passage of an article being conveyed. The control circuit or computer is also connected to the drive means to turn the drive means off when it is not in use. The control means, in conjunction with the detectors, is also capable of detecting that an article is stopped on one of the sections and, therefore, stopping the operation of the drive means on the previous section such that the article is not fed onto the stopped section, thereby preventing crashing or bumping.

Fig. 1 is a plan view of an accumulating conveyor constructed according to the invention, with belts partially deleted for clarity to show the drive means beneath.

Fig. 2 is a side elevation of an accumulating conveyor according to the invention.

Fig. 3 is an end elevation view showing the drive means and the drive roller within the frame member.

Fig. 4 is a cross-sectional view along the line 4-4 of Fig. 2 showing an idler roller and a frame cross member.

Fig. 5 is a partial cross-sectional view lengthwise of a drive roller showing the electrostatic discharge path therethrough.

Fig. 6 is a partial cross-sectional view of an end idler roller showing the grooves therein.

Fig. 7 is a functional flow diagram setting forth the functions that must be programmed into a controlling computer.

Referring to the drawings, there is shown an accumulating transfer conveyor comprising a supporting frame 10 which includes opposite side rails 12 and 13 which are attached together by cross-tie members 14. The entire frame structure is supported by pedestal members 16 evenly spaced from one another to support the conveyor. The frame 10 is constructed of a good electrical conducting material, such as stainless steel. The frame is uncoated or unpainted so that the possibility of chipping and rusting thereunder is prevented, since rust will affect the electrical conductivity of the frame member, mainly its resistance. It is important that the electrical resistance of the electrostatic discharge path, which includes the frame member, be maintained relatively constant. Many of the details of the conveyors, which are well known in the conveyor art, such as pedestal leveling or raising and lowering means have been eliminated for clarity, since they form no part of the present invention.

The conveyor is built in sections with each section having the ability to be attached to another section through the frame members. Thus, the entire conveyor is adjustable in length according to the number of sections.

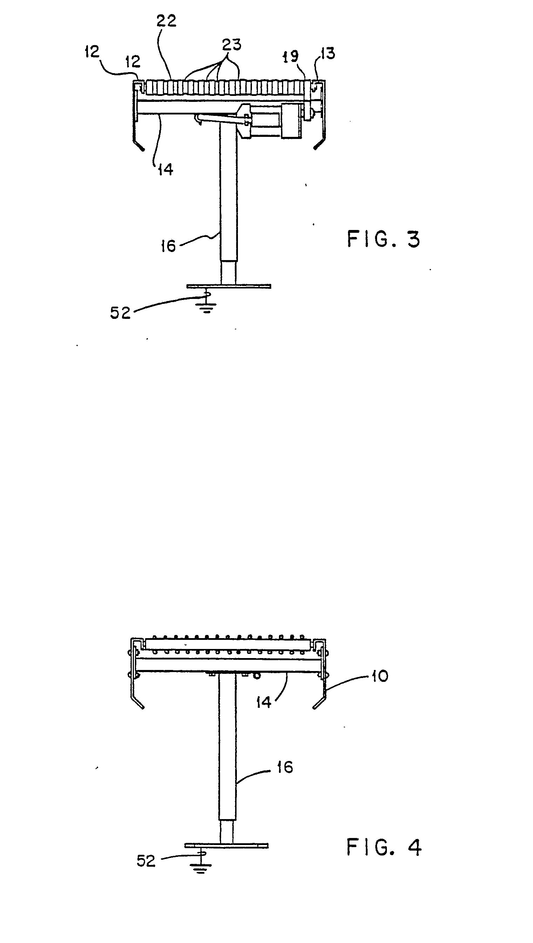

Each section 18a through 18d of the overall conveyor includes its own drive means consisting of a drive motor 20 mounted on the frame 10 and connected to a drive pulley 21 by a belt or chain drive 19, shown in Fig. 3. The drive pulley 21 is attached to a drive roller 22 which is suitably journaled for rotation in the frame side rails 12 and 13. An end idler roller 28 is likewise suitably journaled for rotation in the side rails 12 and 13 of the frame member 10 at the end of each module or section 18a-d of the conveyor.

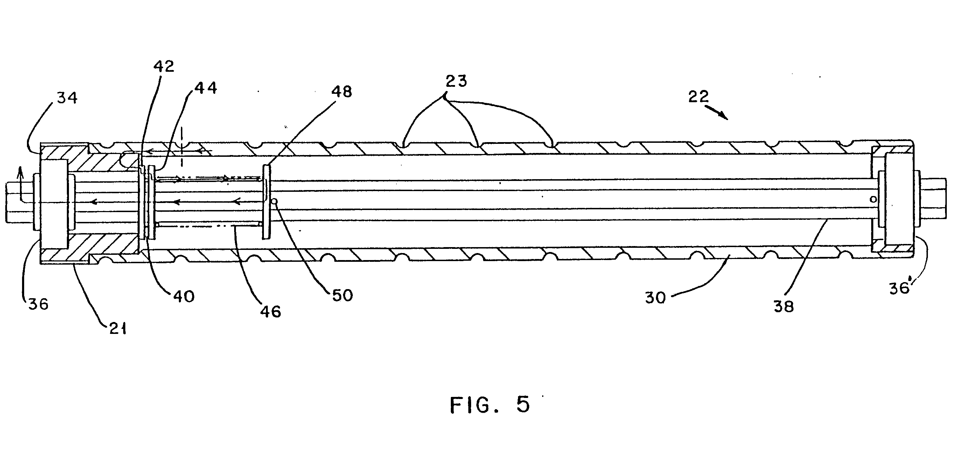

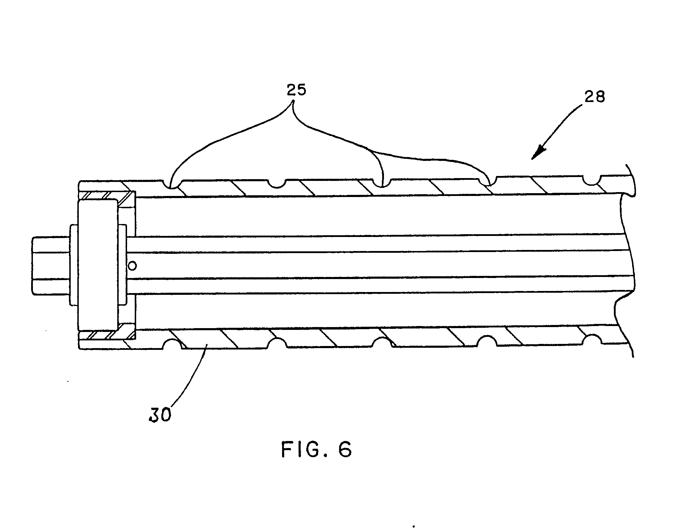

The drive roller 22 and the end idler roller 28 both include shallow grooves 23 and 25, respectively, extending around their periphery and evenly spaced along their longitudinal axis, as shown in Figs. 5 and 6. The grooves 23 in the drive roller 22 and those 25 in the end idler roller 28 are at the exact same spacing opposite each other such that the drive and carrying belts 26 running in the grooves are continued in a straight line parallel to the rails 12 and 13 of the frame 10. Each of these carrying belts 26 are driven by the rotation of the drive roller 22 and are stretched and fitted into the opposite groove in the end idler roller 28 such that the belt is continuous and returned underneath the roller arrangement to the drive roller. The belt means 26 carried by each of the grooves 23 and 25 in the drive and idler roller 22 and 28 constitute the conveyor carrying means or surface as well as serving as a part of the drive means.

The conveyor carrying belts 26 are made of a conductive, resilient material such as carbon impregnated plastic or rubber. This resilient, conductive belt material is available from the Siegling America, Inc., 130 Coolidge Avenue, Englewood, New Jersey 07631.

The belts 26 are substantially round in cross section. It has been found that a circular or round cross section gives better tracking; that is, it tends to stay fixed on the roller in the grooves, whereas a flat belt tends to drift along the length of the roller and not give a true straight tracking. The round cross section of the belts 26 also give a certain amount of resiliency to an article carried on the top surface of the belts. The roundness and resiliency give a definite cushioning effect to the ride. The resiliency of the resilient belts 26, besides cushioning the ride of the article being carried, has a second effect in that at start-up the belt tends to stretch with the initial application of the torque, thus providing a shock-free start-up rather than a sudden jolt as would be obtained with a rigid non-resilient system. The particular conveyor shown in the figures utilizes fifteen separate continuous belts 26 as the conveying surface. However, this number can be changed to suit the width and other characteristics of the conveyor.

Between the drive roller 22 and the end idler roller 28 are located a number of intermediate or carrying rollers 24 having their ends journaled for rotation in the opposite rails 12 and 13 of the frame member 10 thereby providing a carrying surface on which the belts 26 may be supported. The size and number of these carrying rollers 24 are determined by the weight of the articles to be conveyed. The resilient round belts 26 and the carrying rollers 24 substantially reduce the up and down shocks to which articles carried by the conventional rollers conveyors are subject. The carrying rollers 24 have plastic bearings and are free to rotate as the moving belt is pressed against the top surface thereof by the article being carried, thereby providing the required carrying support.

The sleeves or the outer surfaces 30 of the drive roller 22, end idler roller 28 and carrying rollers 24 are made of conductive material such as a conductive metal, such as stainless steel. In the case of the end idler roller 28 and the carrying rollers 24, these conductive metal sleeves allow any electrostatic charge build-up to be passed to the conductive belts which ride thereon. The belts 26 provide an electrical path from the roller surfaces to the driver roller 22 which contains a positive electrical path through the roller to the frame and thence to ground. It should be appreciated that any electrostatic charge build-up on the article being carried by the belts 26 will be dissipated through the conductive belts and through the electrostatic discharge path provided through the drive roller 22 to the frame 10 and ground.

With reference to Fig. 5, the positive continuous electrical conduction path added to the drive roller 22 includes the outer conductive sleeve 30. An electrically conductive end member or sprocket 34 is fitted into an end of the sleeve 30 and is made preferably of a stainless steel material. This end member 34 has the end ball bearing 36 outer surface fixed therein. The inner member of the ball bearing 36 is held fixed such that the outer member attached to the sleeve 30 via the end member 34 is rotatable on the ball bearings. The inner ball bearing member has a hexagonal shaped opening therein which fits on a fixed hexagonal shaped shaft 38 which runs the entire length of the drive roller 22 and extends beyond the ends thereof forming a small end shaft which is attached to the frame member 10. A second end ball bearing 36' is located at the other end of the sleeve 30. These ball type of bearings in the roller 22 provide some electrical conduction therethrough. However, these type of bearings require a lubricant such as grease. It is well known that lubricants have a life associated with their properties, making the circuits that can be constructed therethrough variable with life. These lubricants can become contaminated with nonconducting particles, which further increase the resistance of the circuit, or worse, cause the resistance to vary, producing uncontrollable voltage discharges.

A needle bearing 40 consisting of two adjacent lateral halves 42 and 44 rotatable with respect to each other is provided in the conduction path.

The outer side half 42 of the needle bearing 40 is fixed to the rotating sleeve 30 via the end member or sprocket 34. The end member 34 has a sufficiently large opening therethrough that it is free to rotate around the hex shaft 38 with the rotatable sleeve 30. The inner half side 44 of the needle bearing is fixed to the hex shaft 38 by having a hex shaped opening therein through which the hex shaft passes thereby, locking the inner bearing half to the shaft. This fixed half 44 of the needle bearing 40 has a spring 46 pressed against the inner facing surface thereof. The spring 46 surrounds the hex shaft and is biased against the inner surface of the fixed half 44 of the needle bearing 40 by an end washer member 48 which provides the compression force of the spring 46 against the needle bearing 40. The washer 48 is fixed in place by a pinning means 50, such as a roll pin, which is fitted into a hole in the shaft and presses against the washer member. It should be appreciated that the roll pin 50 makes good physical contact with the hex shaft 38 and with the spring loading washer 48. Thus, the continuous grounding path now extends from the sleeve 30 through the end member 34 into the rotating half 42 of the needle bearing, through the bearing needles, through the inner fixed half 44 of the needle bearing, through the spring 46, through the washer 48 and the roll pin 50, through the hex shaft 38 into the frame member 10 and thus to ground through the ground connection 52. This grounding path is shown schematically by the solid black line with the arrows thereon passing through the path just described above.

The hexagonal shaped shaft 38, which extends through the drive roller 22, extends beyond the ends thereof sufficiently that it can be dropped into oppositely located upwardly opened U-shaped openings 54 in the side rails 12 and 13 of the frame member 10. This opening is of the correct size to receive the opposite flat sides of the hexagonal shaft and hold it fixed with respect to the frame. The contact between the hexagonal shaft 38 and the frame 10 is sufficient for electrical conduction and, accordingly, the electrical conduction path is maintained from the hexagonal shaft 38 to the frame 10.

The grounding of the frame member 10 can be accomplished in a variety of ways. A ground strap can be attached anywhere to the frame member and extend to ground. However, this is not preferable since the ground wire may be in the way of cleaning, etc., underneath the conveyor. The grounding preferred, as shown in Fig. 3, is through the base of the stand. This presents no problem since each conveyor section either has a ground stand or is rigidly attached at the frame faces to a section having a ground stand.

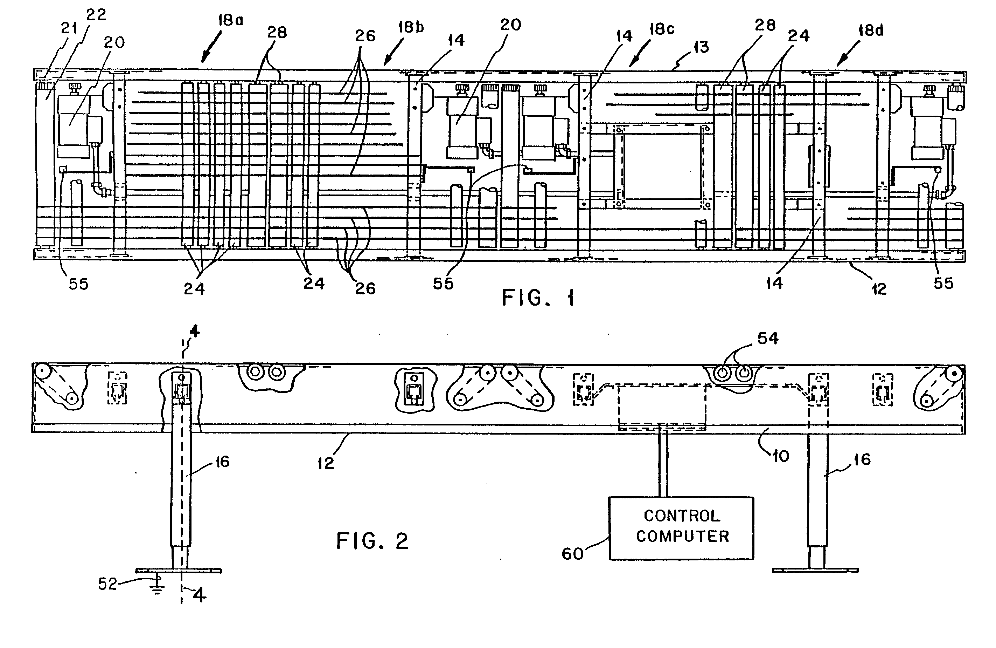

Referring again to Fig. 1, it can be seen that each section 18a-d of the conveyor contains a detector 55, preferably a photodetector, which senses the presence or absence of an article being conveyed on the particular section. The photodetectors 55 are connected to a computer means 60, such as an IBM Series/1 which is available for controlling the overall factory operation on a dedicated control computer such as an IBM PC. The computer 60 has an output connection to each one of the drive means 20 to provide a signal turning them on or off individually. For example, the computer stops the drive means of the prior conveyor section from which the article is received if a new article is not received thereby. That is, when the prior sections are not being utilized for conveying a new article, they are turned off. This saves power and also minimizes contamination by the drive motors and operating parts when the conveyor is used in a clean room environment. Each photodetector 55 is connected to the computer 60 and signals either a full or empty condition as the detector is covered or open. The photodetectors have a second use in that the computer turns off the drive motor of the preceding section when an article being conveyed is stopped on the next conveyor section. This prevents a second article from entering a utilized conveyor section and thereby causing a crash or bump of carried articles.

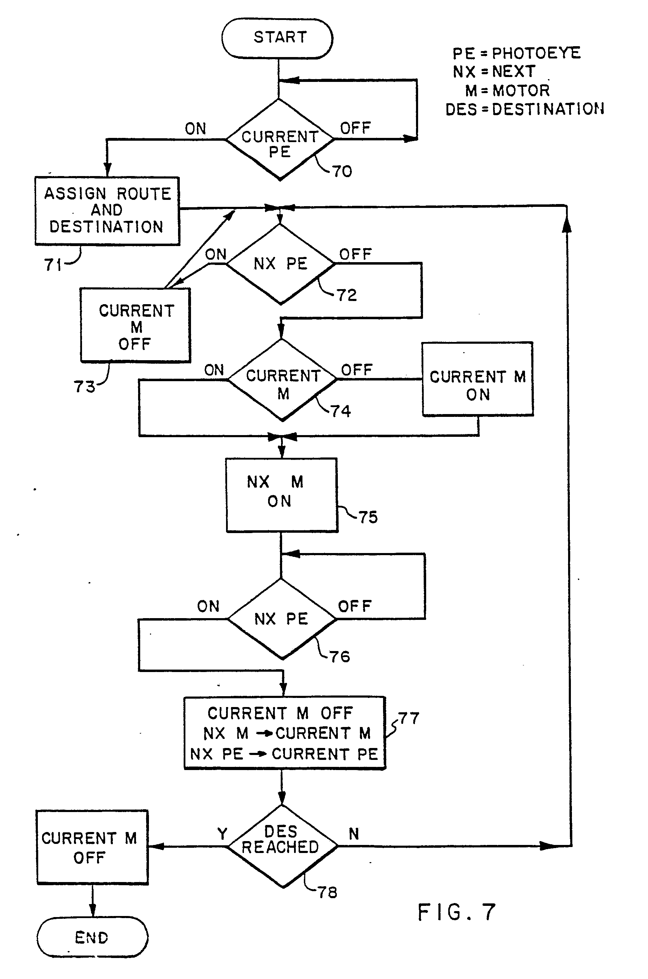

Referring to Fig. 7, there is shown a functional flow diagram setting forth the functions that must be programmed into the controlling computer. The main function is to recognize, by a photocell, that an article is present on the conveyor section. If an article is present, then we want the computer to turn off the prior conveyor section motor. As previously mentioned, this will prevent the conveyor from passing an article onto a conveyor section that is already occupied. The photocell is considered on or switched when the article is on the conveyor section, interrupting the light beam. The block 70 represents the current condition of the photoelectric cell or photo eye. If the photo eye is on or switched, the assigned route and destination is assigned as represented by block 71. If the photocell in the next conveyor section represented by block 72 is on or switched, the current motor is turned off, as represented by block 73. If the next photocell is off indicating no article on that section of the conveyor, then the current motor is turned on as represented by decision block 74, if it is not already on. This allows the article to be conveyed to the next conveyor section. It also turns the next conveyor section motor on so that the article can be received thereby as represented by block 75. The next logical function is represented by decision block 76 which represents the operations in response to the next photocell being on or off.

If the photocell is on, indicating an article on the conveyor section, then the current motor is turned off as represented by block 77. Since the article has moved to the next conveyor section, the motor referred to as "next motor" is now the "current motor" and the next photocell is now the current photocell. The next decision block 78 repesents the logic between the destination reached or not reached. If the destination is reached, then the current motor is turned off and the end of the logic or program has been reached. If the destination is not reached, the logic flow returns to the next photocell decision block 72 to run through the same procedure for the conveyor section the article has moved to.

It should be readily appreciated that there are a number of computers capable of responding to a program of functional logic as set forth in the flow chart of Fig. 7.

**Claims**

1. A conveyor for conveying articles sensitive to mechanical shock and electric fields comprising:
    an electrically conductive conveyor frame (10),
    a resilient, continuous belt means (26) for conveying articles,
    a drive means including a drive roller (22) having an electrically conductive shaft (38), supported by said frame (10) and driving said continuous belt means (26),
    an end idler roller (28) around which said continuous belt means (26), returns underneath and which is located at an end of the conveyor,
    intermediate idler rollers (24) located between said drive roller (22) and said end idler roller (28) for supporting said belt means (26),
    said drive roller (22), end idler roller (28) and intermediate rollers (24) having electrically conductive outer sleeves (30),
    grounding means (16, 52) electrically connecting said frame (10) to electrical ground,
    characterized in that said continuous belt means (26) is electrically conductive, said electrically conductive shaft (38), extending through said drive roller (22) is fixed to and forms electrical continuity with said frame (10) and in that a flat needle bearing (40) with one half (42) rotating and one half (44) fixed to said shaft (38) establishes an electrically conductive path from the electrically conductive sleeve (30) of said drive roller (22) with said fixed shaft (38), thereby providing a continuous electrically discharge path through said conveyor from articles conveyed thereon.

2. A conveyor according to claim 1, wherein said belt means (26) is a plurality of parallel disposed, round in cross section belts.

3. A conveyor according to claim 1 or 2, wherein said drive roller (22) includes parallel, evenly spaced shallow grooves (23) in which said belt means (26) rides to maintain said belts parallel.

4. A conveyor according to any previous claim, wherein the halves (42, 44) of said flat needle bearing (40) are pressed in place by a spring (46) and a washer (48) which are locked in place by pinning means (50) to said shaft (38) to maintain electric continuity through said needle bearing, spring, washer and pinning means to said fixed shaft (38).

5. A conveyor according to any previous claim, wherein said electrically conductive conveyor frame (10) is made of uncoated stainless steel to provide a low resistance electrical path to ground.

6. A conveyor according to claim 3, wherein said end idler roller (28) contains shallow grooves (25) spaced at the same spacing as the shallow grooves (23) in said drive roller (22) to maintain the parallel spacing of said belt means (26).

7. A conveyor according to any previous claim, wherein said intermediate idler rollers (24) are journaled for rotation at both ends thereof and are adapted for attachment to opposite points in side rails (12, 13) of said frame (10) to provide support for articles carried on said conveyor and wherein said belt means (26) is supported against said intermediate idler rollers (24) providing an electrical path from said electrically conductive sleeves (30) to said belt means (26).

8. A conveyor according to any previous claim, wherein said belt means (26) is sufficiently resilient to provide stretch on start-up thereby giving a start-up shock free operation.

9. A multi-section conveyor, wherein a plurality of conveyor sections according to any previous claim are provided, each of which is serially attachable to form a variable length conveyor.

10. A multi-section conveyor according to claim 9, wherein each conveyor section includes a detector (55) adjacent the top thereof to detect an article being conveyed on the conveyor section.

11. A multi-section conveyor according to claim 10, wherein said detectors (55) are connected to a control computer (60) which controls drive means (20, 22) of each conveyor section to stop the drive means of the section of said conveyor when not in use.

12. A multi-section conveyor according to claim 11, wherein said control computer (60) stops said drive means (20, 22) of the previous section of said conveyor when an article is detected thereon by said detector (55) and when the leading contiguous section is stopped with an article in place thereon thereby providing no shock operation.

**Patentansprüche**

1. Förderer zum Transport von auf mechanische Erschütterungen und elektrische Felder reagierenden Gegenständen, mit

einem elektrisch leitenden Stützrahmen (10), einer elastischen, kontinuierlichen Bandanlage (26) zum Befördern von Gegenständen,

einer Antriebseinrichtung mit einer Antriebsrolle (22) mit elektrisch leitender Welle (38), welche von dem Rahmen (10) getragen wird und die kontinuierliche Bandanlage (26) antreibt,

einer Umlenkrolle (28), um die die kontinuierliche Bandanlage (26) auf der Unterseite zurückläuft und die an einem Ende des Förderers angeordnet ist,

Zwischenleitrollen (24) zwischen der Antriebsrolle (22) und der Umlenkrolle (28) zur Unterstützung des Bandes (26),

wobei Antriebsrolle (22), Umlenkrolle (28) und Zwischenleitrollen (24) elektrisch leitende Außenflächen (30) aufweisen,

und mit Erdanschlüssen (16, 52), welche den Rahmen (10) an elektrische Masse anschließen,

dadurch gekennzeichnet, daß die kontinuierliche Bandanlage (26) elektrisch leitend ist, daß die elektrisch leitende Welle (38), die sich durch die Antriebsrolle (22) hindurch erstreckt, am Rahmen (10) befestigt ist und mit diesem elektrische Kontinuität aufweist und daß ein flaches Nadellager (40), dessen eine Hälfte (42) sich dreht und dessen andere Hälfte (44) an der Welle (38) befestigt ist, einen elektrisch leitenden Weg von der elektrisch leitenden Oberfläche (30) der Antriebsrolle (22) zur festen Welle (38) bildet, wodurch ein kontinuierlicher elektrischer Entladungsweg durch den Förderer über die durch ihn beförderten Gegenstände gegeben ist.

2. Förderer nach Anspruch 1, dadurch gekennzeichnet, daß die Bandanlage (26) aus einer Vielzahl von parallel angeordneten Bändern mit rundem Querschnitt besteht.

3. Förderer nach Anspruch 1 oder 2, dadurch gekennzeichnet, daß die Antriebsrolle (22) parallele, im gleichen Abstand voneinander angeordnete, flache Rillen (23) aufweist, durch welche die Bandanlage (26) verläuft und dadurch die Bänder parallel hält.

4. Förderer nach einem der vorhergehenden Ansprüche, dadurch gekennzeichnet, daß die Hälften (42, 44) des flachen Nadellagers (40) mittels einer Feder (46) und einer Unterlegscheibe (48) gehalten werden, welche durch Stifte (50) an der Welle (38) gehalten werden, so daß die elektrische Kontinuität durch das Nadellager, die Feder, Unterlegscheibe und die Stifte zur festen Welle (38) aufrechterhalten wird.

5. Förderer nach einem der vorhergehenden Ansprüche, dadurch gekennzeichnet, daß der elektrisch leitende Rahmen (10) aus unbeschichtetem rostfreiem Stahl besteht, so daß zur Erde ein elektrischer Weg mit geringem Widerstand gegeben ist.

6. Förderer nach Anspruch 3, dadurch gekennzeichnet, daß die Umlenkrolle (28) flache Rillen (25) aufweist, welche im gleichen Abstand voneinander angeordnet sind wie die flachen Rillen (23) der Antriebsrolle (22), so daß der parallele Abstand der Bandanlage (26) aufrechterhalten wird.

7. Förderer nach einem der vorhergehenden Ansprüche, dadurch gekennzeichnet, daß die Zwischenleitrollen (24) Zapfen zur Drehung an beiden Enden aufweisen und an sich gegenüberliegenden Punkten in Seitenschienen (12, 13) des Rahmens (10) angebracht werden, so daß auf dem Förderer transportierte Gegenstände getragen werden, und daß die Bandanlage (26) gegen die Zwischenleitrollen (24) gehalten wird, so daß ein elektrischer Weg zwischen elektrisch leitenden Oberflächen (30) und Bandanlage (26) gegeben ist.

8. Förderer nach einem der vorhergehenden Ansprüche, dadurch gekennzeichnet, daß die Bandanlage (26) elastisch genug ist, um beim Start gedehnt zu werden, so daß ein ruckfreier Start gegeben ist.

9. Mehrgliedriger Förderer, dadurch gekennzeichnet, daß eine Vielzahl von Förderabschnitten nach einem der vorhergehenden Ansprüche gegeben ist, von denen jeder seriell anfügbar ist, so daß ein Förderer variabler Länge gebildet werden kann.

10. Mehrgliedriger Förderer nach Anspruch 9, dadurch gekennzeichnet, daß jeder Förderabschnitt einen Detektor (55) nahe seiner Oberfläche aufweist, mit dem ein auf dem Förderabschnitt transportierter Gegenstand festgestellt wird.

11. Mehrgliedriger Förderer nach Anspruch 10, dadurch gekennzeichnet, daß die Detektoren (55) mit einem Steuer-Computer (60) verbunden sind, welcher Antriebseinrichtungen (20, 22) für jeden Förderabschnitt steuert, so daß die Antriebseinrichtung eines Förderabschnitts gestoppt wird, wenn er nicht gebraucht wird.

12. Mehrgliedriger Förderer nach Anspruch 11, dadurch gekennzeichnet, daß der Steuer-Computer (60) die Antriebseinrichtung (20, 22) des vorherigen Abschnitts des Förderers stoppt, wenn der Detektor (55) darauf einen Gegenstand feststellt und wenn der führende, angrenzende Abschnitt einen Gegenstand aufweist und gestoppt wird, so daß ruckfreier Betrieb gegeben ist.

## Revendications

1. Convoyeur pour transporter des articles sensibles aux chocs mécaniques et aux champs électriques, comprenant:

- un bâti (10) de convoyeur électriquement conducteur,

· un agencement de courroie continue élastique (26) pour transporter les articles,

- des moyens d'entraînement comprenant un rouleau (22) d'entraînement ayant un axe (38) électriquement conducteur, supporté par ledit bâti (10) et entraînant ledit agencement de courroie continue (26),

- un rouleau fou (28) d'extrémité autour duquel ledit agencement de courroie continue (26) s'enroule et retourne en dessous, et situé à une extrémité du convoyeur,

- des rouleaux fous intermédiaires (24) situés entre ledit rouleau (22) d'entraînement et ledit rouleau fou (28) d'extrémité, pour supporter ledit agencement de courroie (26),

- ledit rouleau (22) d'entraînement, ledit rouleau fou (28) et lesdits rouleaux intermédiaires (24) ayant des chemises extérieures (30) électriquement conductrices,

- des moyens (16, 52) de mise à la terre pour connecter électriquement ledit bâti (10) à la terre, caractérisé par le fait que ledit agencement de courroie continue (26) est électriquement conducteur, que ledit axe électriquement conducteur (38) s'étendant à travers ledit rouleau (22) d'entraînement est fixé audit bâti (10) et forme avec lui une continuité électrique, et qu'un roulement plat (40) à aiguilles, constitué d'une moitié tournante (42) et d'une moitié (44) fixée audit axe (38), établit un chemin électriquement conducteur entre la chemise électriquement conductrice (30) dudit rouleau (22) d'entraînement et ledit axe fixé (38), ce qui fournit un chemin continu de décharge électrique à travers ledit convoyeur sans affecter les articles transportés.

2. Convoyeur selon la revendication 1, dans lequel ledit agencement de courroie (26) est formé d'une pluralité de courroies, de section transversale circulaire et disposées parallèlement.

3. Convoyeur selon les revendications 1 ou 2, dans lequel ledit rouleau (22) d'entraînement comporte des cannelures parallèles (23), espacées de façon égale et peu profondes, dans lesquelles ledit agencement de courroie (26) se déplace pour maintenir parallèles les courroies.

4. Convoyeur selon l'une quelconque des revendications précédentes, dans lequel les moitiés (42, 44) dudit roulement plat (40) à aiguilles sont pressées en position l'une contre l'autre par un ressort (46) et une rondelle (48) qui sont bloqués en place par une goupille (50) sur ledit axe (38), pour maintenir une continuité électrique à travers ledit roulement plat à aiguilles, le ressort, la rondelle et la goupille jusqu'audit arbre fixé (38).

5. Convoyeur selon l'une quelconque des revendications précédentes, dans lequel ledit bâti (10) de convoyeur électriquement conducteur est formé en acier inoxydable non revêtu, pour fournir un chemin de faible résistance électrique jusqu'à la terre.

6. Convoyeur selon la revendication 3, dans lequel ledit rouleau fou (28) d'extrémité comporte des cannelures (25) peu profondes et espacées d'un espacement égal à celui des cannelures peu profondes (23) dudit rouleau (22) d'entraînement, pour maintenir l'espacement parallèle dudit agencement de courroie (26).

7. Convoyeur selon l'une quelconque des revendications précédentes, dans lequel lesdits rouleaux intermédiaires (24) sont supportés à leurs deux extrémités en vue de leur rotation, et sont adaptés pour leur fixation en des points opposés de rails latéraux (12, 13) dudit bâti (10), afin de fournir un support aux articles transportés sur ledit convoyeur, et dans lequel ledit agencement de courroie (26) est supporté contre lesdits rouleaux fous intermédiaires (24), fournissant ainsi un chemin électrique depuis lesdites chemisess (30) électriquement conductrices jusqu'audit agencement de courroie (26).

8. Convoyeur selon l'une quelconque des revendications précédentes, dans lequel ledit agencement de courroie (26) est suffisamment élastique pour présenter un allongement lors du démarrage, ce qui permet d'obtenir une opération de démarrage sans chocs.

9. Convoyeur à plusieurs sections, dans lequel une pluralité de sections de convoyeur selon l'une quelconque des revendications précédentes sont fournies, chacune d'elles étant connectable en série de façon à former un convoyeur de longueur variable.

10. Convoyeur à plusieurs sections selon la revendication 9, dans lequel chaque section de convoyeur comporte un détecteur (55) adjacent au sommet de celle ci, pour détecter la présence d'un article transporté par la section de convoyeur.

11. Convoyeur à plusieurs sections selon la revendication 10, dans lequel lesdits détecteurs

(55) sont connectés à un ordinateur (60) de commande, qui commande les moyens d'entraînement (20, 22) de chaque section de convoyeur, pour arrêter les moyens d'entraînement de la section dudit convoyeur quand il n'est pas utilisé.

12. Convoyeur à plusieurs sections selon la revendication 11, dans lequel ledit ordinateur (60) de commande arrête lesdits moyens d'entraînement (20, 22) de la section précédente dudit convoyeur quand un article est détecté sur cette section par ledit détecteur (55) quand, en même temps, la section contigue ultérieure est arrêtée avec un article sur elle, ce qui procure un fonctionnement sans chocs.

FIG. 1

FIG. 2

CONTROL
COMPUTER

0 177 677

22
23
12
12
19 13
14

16

FIG. 3

52

10
14

16

52

FIG. 4

FIG. 5

0 177 677

FIG. 6

**0 177 677**

PE = PHOTOEYE
NX = NEXT
M = MOTOR
DES = DESTINATION

FIG. 7